# EUROPÄISCHE PATENTSCHRIFT

(11) **EP 2 714 420 B1**
(45) Veröffentlichungstag und Bekanntmachung des Hinweises auf die Patenterteilung: **28.01.2015**
(21) Anmeldenummer: 12723656.0
(22) Anmeldetag: 24.05.2012
(51) Int. Cl.: B42D 25/00

(54) **FOLIE UND DEREN HERSTELLUNGSVERFAHREN**
FILM AND METHOD FOR PRODUCING SAME
FEUILLE DE SON PROCÉDÉ DE FABRICATION

(30) Priorität: 24.05.2011 DE 102011102999
(43) Veröffentlichungstag der Anmeldung: 09.04.2014
(73) Patentinhaber: Leonhard Kurz Stiftung & Co. KG, 90763 Fürth (DE)
(72) Erfinder: BREHM, Ludwig, 91325 Adelsdorf (DE); BEZOLD, Hans Peter, 92237 Sulzbach-Rosenberg (DE); GEIM, Dieter, 91177 Thalmässing (DE)
(74) Vertreter: Louis Pöhlau Lohrentz
(86) Internationale Anmeldenummer: PCT/EP2012/059657
(87) Internationale Veröffentlichungsnummer: WO 2012/160122

(56) Entgegenhaltungen:
- US-A- 5 714 231

## Beschreibung

Die Erfindung betrifft eine Folie, die eine Replizierlackschicht mit einer darauf ausgebildeten diffraktiven Reliefstruktur sowie eine transparente Farblackschicht aufweist, ein Sicherheitspapier, ein Wertdokument und eine Transferfolie mit einer solchen Folie, sowie ein Herstellungsverfahren einer solchen Folie.

Es ist bekannt, Wertdokumente mit Sicherheitselementen auszustatten, die in Form von flexiblen Folienelementen einen diffraktiven, optisch variablen Effekt zeigen. Dies kann durch eine Oberflächenreliefstruktur erreicht werden, die in eine Replizierlackschicht eingeprägt und deren Sichtbarkeit durch eine Hinterlegung mit einer Reflexionsschicht, insbesondere in Form einer reflektierenden Metallfläche, verbessert wird. Derartige Sicherheitselemente zählen ganz allgemein zu den sogenannten OVDs (OVD = Optically Variable Device). Zusätzliche Merkmale derartiger Sicherheitselemente wie farbige Bereiche sind für die Fälschungssicherheit und unter ästhetischen Gesichtspunkten wünschenswert. Dazu kann die Replizierlackschicht eingefärbt werden. Diese Technik stößt allerdings an ihre Grenzen, wenn man mehrfarbige diffraktive Elemente oder eine hohe Flexibilität in der Farbgebung wünscht.

In der US 5,714,231 A (offenbart den Oberbegriff des Anspruchs 1) (siehe auch die DE 4313521 A) geht es darum, Strukturen mit optisch-diffraktivem Effekt nur bereichsweise bereitzustellen, entsprechende Strukturen sollen also ausgelöscht werden, um die diffraktiven Effekte bereichsweise zu vermeiden. Als Lösung wird vorgeschlagen, eine Dekorschicht vollständig zu beprägen und anschließend dort, wo kein optisch-diffraktiver Effekt bereitgestellt sein soll, eine Decklackschicht aufzubringen. Für einen Betrachter entsteht der Eindruck, dass die Struktur nur in dem gewünschten Bereich vorhanden sind, insbesondere, weil Vertiefungen und Erhebungen nivelliert werden. Oberhalb der Lackschicht ist des Weiteren noch eine Reflexionsschicht vorgesehen. Auch die Reflexionsschicht ist dort, wo die Decklackschicht vorhanden ist, im Wesentlichen eben.

Der Erfindung liegt nun die Aufgabe zugrunde, ein verbessertes diffraktives Folienelement mit farbigen Bereichen und ein entsprechendes Herstellungsverfahren anzugeben.

Die Aufgabe wird gelöst durch eine Folie, welche eine lichtdurchlässige Replizierlackschicht mit einer in einer ersten Seite der Replizierlackschicht ausgebildeten diffraktiven Reliefstruktur, eine auf der Reliefstruktur angeordnete, lediglich bereichsweise ausgebildete, lichtdurchlässige Farblackschicht und eine auf der ersten Seite der Replizierlackschicht angeordnete, zumindest bereichsweise ausgebildete Reflexionsschicht umfasst, wobei in Bereichen der Folie, in denen die Farblackschicht und die Reflexionsschicht übereinander liegen, die Farblackschicht zwischen der Replizierlackschicht und der Reflexionsschicht angeordnet ist, wobei die Farblackschicht muster- oder rasterförmig ausgebildet ist, und i) benachbarte Muster- oder Rasterelemente der Farblackschicht einen gegenseitigen Abstand aufweisen, der in einem Bereich von 50 bis 250 µm, vorzugsweise von 70 bis 200 µm, liegt, und/oder ii) eine Linienbreite, ein Punktdurchmesser oder ein Einzelelement-Durchmesser der Muster- oder Rasterelemente in einem Bereich von 50 bis 250 µm, vorzugsweise von 70 bis 200 µm, liegt. Die Aufgabe wird außerdem gelöst durch ein Verfahren zur Herstellung einer Folie nach einem der Ansprüche 1 bis 11, wobei a) in einer ersten Seite einer lichtdurchlässigen Replizierlackschicht eine diffraktive Reliefstruktur ausgebildet wird, b) nach dem Schritt a) auf die Reliefstruktur lediglich bereichsweise eine lichtdurchlässige Farblackschicht aufgetragen wird, sodass die Farblackschicht muster- oder rasterförmig ausgebildet ist, und i) benachbarte Muster- oder Rasterelemente der Farblackschicht einen gegenseitigen Abstand aufweisen, der in einem Bereich von 50 bis 250 µm. vorzugsweise von 70 bis 200 µm, liegt, und/oder ii) eine Linienbreite, ein Punktdurchmesser oder ein Einzelelement-Durchmesser der Muster- oder Rasterelemente in einem Bereich von 50 bis 250 µm, vorzugsweise von 70 bis 200 µm, liegt und c) nach dem Schritt b) auf die erste Seite der Replizierlackschicht zumindest bereichsweise eine Reflexionsschicht aufgebracht wird, vorzugsweise in Form einer Metallschicht.

Als lichtdurchlässig wird eine transparente oder transluzente Schicht bezeichnet, wenn mindestens 50 %, insbesondere mindestens 80 % von einfallendem sichtbaren Licht im Wellenlängenbereich von 380 bis 780 nm durch die Schicht hindurch tritt.

Die Erfindung überwindet das technische Vorurteil, dass eine Überdruckung einer diffraktiven Reliefstruktur einer Replizierlackschicht mit einer Farblackschicht aufgrund der Auffüllung bzw. Einebnung der Reliefstruktur durch die Farblackschicht zu einer Auslöschung des diffraktiven Effekts der Reliefstruktur führt und somit praktisch nicht möglich ist. Die Erfindung nutzt hierbei die Erkenntnis, dass bei einer geeigneten, lediglich bereichsweisen Überdruckung der Reliefstruktur der diffraktive Effekt der Reliefstruktur nur in den überdruckten Bereichen vermindert bzw. ausgelöscht wird. Durch das begrenzte Auflösungsvermögen des bloßen Auges eines menschlichen Betrachters werden die nicht überdruckten Einzelbereiche der Reliefstruktur so miteinander verbunden, dass einem Betrachter ein lückenloses OVD erscheint. In der Konsequenz bleibt sowohl der diffraktive Effekt als auch die Farbigkeit des Farblacks ausreichend gut sichtbar.

Die vorgeschlagene Erfindung bietet den Vorteil hoher Flexibilität: man stellt mit einem herkömmlichen transparenten Replizierlack eine diffraktive Struktur her und erzielt je nach Designwunsch eine Farbigkeit in beliebigen Bereichen der diffraktive Struktur, indem man die diffraktive Struktur mit einem transparenten Farblack bedruckt, der durch die Replizierlackschicht hindurch sichtbar ist und der diffraktiven Struktur Farbigkeit verleiht.

Vorteilhafte Ausgestaltungen der Erfindung sind in den Unteransprüchen bezeichnet.

Es ist bevorzugt, wenn die Farblackschicht unmittelbar auf der Reliefstruktur angeordnet ist.

Bevorzugt wird der lichtdurchlässige Replizierlack durch einen transparenten Replizierlack in Form eines thermoplastischen Lacks oder eines thermisch vernetzenden Lacks gebildet.

Als Replizierlack wird vorzugsweise ein Lack aus PMMA und Zellulose-Estern verwendet (PMMA = Polymethylmethacrylat). Die Dicke der Replizierlackschicht beträgt bevorzugt 0,5 bis 10 µm, weiter vorzugsweise 0,5 bis 5 µm. Es ist möglich, als Replizierlack einen farblosen Lack zu verwenden. Alternativ kann aber auch ein eingefärbter Lack verwendet werden, der in Kombination mit der Farblackschicht kombinierte farbige Effekte hervorruft. Beispielsweise kann in Bereichen der Folie, in denen die beiden eingefärbten transparenten Lackschichten, d. h. die Replizierlackschicht und die Farblackschicht, übereinander liegen, durch subtraktive Farbmischung ein weiterer Farbeindruck erzeugt werden. Beispielsweise ergeben übereinanderliegende cyanblaue und gelbe Farbschichten einen grünen Farbeindruck und übereinanderliegende gelbe und magentarote Farbschichten einen orangen Farbeindruck.

Die Replizierlackschicht ist beispielsweise aus einem Lack folgender Zusammensetzung gebildet worden (in g):

| | |
|---|---|
| 12000 | Methylethylketon |
| 1000 | Diacetonalkohol |
| 1500 | Acrylpolymer auf Basis von Methylmethacrylat (Molgewicht ca. 150.000 - 200.000 au (= atomic units)) |
| 2750 | mit denaturiertem Ethanol befeuchtetes Cellulosenitrat, 35% Ethanolgehalt |
| 500 | Polyisocyanat auf Basis Isophorondiisocyanat |

Die Reflexionsschicht wird vorzugsweise als eine Metallschicht ausgebildet, insbesondere eine aufgedampfte oder aufgesputterte Metallschicht, bestehend aus einem beliebigen Metall wie Aluminium, Chrom, Nickel, Kupfer, Silber, Gold oder einer Metalllegierung. Es ist auch möglich, dass eine HRI-Schicht oder - Schichtenfolge als Reflexionsschicht dient (HRI = High Refractive Index). Es ist weiter möglich, dass eine Reflexionsschicht durch Aufdrucken einer metallischen Farbe ausgebildet wird. Die Dicke der Reflexionsschicht beträgt bevorzugt 5 bis 100 nm, weiter vorzugsweise 10 bis 50 nm. Die Reflexionsschicht kann vollflächig oder partiell ausgebildet sein. Im letzteren Fall kann die Reflexionsschicht in Form eines Rasters oder eines Musters ausgebildet sein, z. B. in Form eines Musters, das auf ein Muster bzw. Raster der Farblackschicht und/oder der Reliefstruktur abgestimmt ist.

Es ist möglich, dass eine partielle Ausbildung der Reflexionsschicht durch bereichsweises Aufdrucken einer metallischen Farbe erfolgt. Alternativ kann in dem Schritt c) eine vollflächig erzeugte Reflexionsschicht teilweise wieder entfernt werden, vorzugsweise durch ein Demetallisierungsverfahren. Beispielsweise kann dazu bereichsweise ein Ätzresist aufgedruckt werden und die freiliegenden Metallbereiche abgeätzt werden. Es ist auch möglich, vor Aufbringen der Reflexionsschicht bereichsweise einen Liftoff-Lack zu drucken, der nach der Reflexionsschichtaufbringung zusammen mit der darüber liegenden Reflexionsschicht abgewaschen wird. Auch eine Demetallisierung mit einer Photomaske und Photolack ist möglich. Ein weiteres Demetallisierungsverfahren beruht auf einer unterschiedlich dicken Metallschicht, die sich bei einem Aufdampfen auf Strukturen mit unterschiedlichem Tiefen-Breiten-Verhältnis ergibt; hierzu wird verwiesen auf die Patentschrift DE-B4-102005006231.

Das Muster oder Raster der Farblackschicht kann z. B. als ein gerades, wellen- oder kreisförmiges Linienraster aus einzelnen Linienelementen ausgebildet sein. Dabei ist es möglich, dass der Farblack in Linienform gedruckt wird, wobei die Linien auch gekrümmt sein können. Ein Beispiel hierfür ist ein Kreis-LinienRaster, wobei ineinander geschachtelte Kreise gedruckt werden. Dies hat den Vorteil, dass der Farbbereich einen scharf begrenzten Außenrand aufweist.

Das Muster oder Raster kann z. B. auch als ein Muster bestehend aus geometrischen Einzelelementen wie Punkten, Quadraten, Rechtecken, Rauten, Zeichen, Logos oder Symbolen, ein durch autotypische oder frequenzmodulierte Rasterung eines Halbtonbildes erzeugtes Rasterbild aus einzelnen Rasterelementen, insbesondere Rasterpunkten, oder ein ähnliches Muster ausgebildet sein. Es ist dabei möglich, dass die Farblackschicht als ein Punktraster oder Cluster-Raster ausgebildet ist, wobei der Farblack quasi in Form von "Farbinseln" gedruckt wird, deren Verteilung gleichmäßig oder auch zufällig, z. B. mittels sog. "error diffusion", sein kann. Die Farblackschicht kann auch aus mehreren Farben aufgebaut sein, wobei die einzelnen Farben vorzugsweise in aufeinanderfolgenden Druckschritten aufgebracht werden. Dabei ist es möglich, die einzelnen Farben jeweils in einem vorgenannten Raster aufzubringen und dadurch ein mehrfarbiges Rasterbild zu erzeugen. Beispielsweise kann mit Hilfe der Farben CMYK (C = Cyan, M = Magenta, Y = Yellow, K (=Key) =Black) in bekannter Weise des Vierfarbdrucks ein Echtfarbenbild erzeugt werden. Versuche haben ergeben, dass zur Erzeugung bestimmter Echtfarbenbilder auch nur drei Komponenten CMY oder auch nur zwei Komponenten, z. B. CM ausreichen. Ebenso ist die Verwendung von mehr als vier Farbkomponenten möglich, z. B. sechs Farbkomponenten wie im Pantone Hexachrome^{®}-System mit den Farben Cyan, Magenta, Yellow, Green, Orange, Black. Alternativ ist es zur Erzeugung von Farbbildern möglich, sogenannte Mischfarben oder Schmuckfarben, z. B. aus dem Pantone^{®}- oder HKS-Farbsystem zu verwenden.

Bevorzugt ist es, wenn das Farblack-Raster im Vergleich zu dem darunter liegenden diffraktiven Design der Reliefstruktur so ausgebildet ist, dass keine Moire-Effekte auftreten. Das heißt beispielsweise, dass das Farblack-Raster und die Reliefstruktur nicht das identische Design, sondern unterschiedliche Designs aufweisen. Ist nämlich das Design identisch, würden aufgrund von Registertoleranzen und Positions-Versatz unerwünschte Moiré-Effekte entstehen.

Dadurch, dass benachbarte Muster- oder Rasterelemente der Farblackschicht einen gegenseitigen Abstand aufweisen, der unterhalb von ca. 250 bis 300 µm liegt, vorzugsweise unterhalb des Auflösungsvermögens des bloßen Auges, erscheint einem menschlichen Betrachter die Folie im Bereich der gerasterten oder gemusterten Farblackschicht trotz deren Rasterung bzw. Musterung als eine lückenlose Farbfläche. Die untere Grenze des gegenseitigen Abstands benachbarter Muster- oder Rasterelemente (in einem Bereich von 50 bis 250 µm, weiter vorzugsweise von 70 bis 200 µm) ist durch die zum Aufbringen des Farblacks verwendete Drucktechnik, insbesondere Tiefdruck, begrenzt.

Wenn eine Linienbreite, ein Punktdurchmesser oder ein Einzelelement-Durchmesser der Muster- oder Rasterelemente unterhalb von ca. 250 bis 300 µm liegt, vorzugsweise unterhalb des Auflösungsvermögens des bloßen Auges, ist für einen menschlichen Betrachter der diffraktive Effekt der Reliefstruktur trotz der Überdruckung durch die den diffraktiven Effekt abschwächende bzw. auslöschende Farblackschicht durchgehend und lückenlos sichtbar. Vorzugsweise liegt die maximale Ausdehnung der Rasterelemente in einem Bereich von 50 bis 250 µm, weiter vorzugsweise von 70 bis 200 µm.

In einer bevorzugten Ausgestaltung weist die Farblackschicht eine Dicke in einem Bereich von 0,1 bis 6 µm auf, vorzugsweise von 0,2 bis 4 µm. Dabei ist es von Vorteil, wenn die Farblackschicht gedruckt wird, vorzugsweise in Tief-, Sieb- oder Flexodruck. Je geringer die Schichtdicke der Farblackschicht ist, desto weniger Farblack steht zum Auffüllen der Reliefstrukturen zur Verfügung und desto besser bleibt die Reliefstruktur auf der von der Reliefstruktur abgewandten Seite der Farblackschicht erhalten und damit optisch wirksam.

Der Farblack besteht vorzugsweise aus höchstens 25 Gew.-%, insbesondere höchstens 20 Gew.-% Farbmitteln, d. h. Pigmenten und/oder Farbstoffen, und mindestens 75 Gew.-%, insbesondere mindestens 80 Gew.-% Bindemitteln, insbesondere aromatischen Bindemitteln.

Eine Zusammensetzung des Farblacks mit Pigmenten ist insbesondere so ausgebildet, dass sie die Replizierlackschicht weder angreift, anlöst oder auflöst, so dass die Reliefstruktur unverändert erhalten bleibt. Die Zusammensetzung zur Bildung der mindestens einen Farblackschicht kann so die in der Replizierlackschicht gebildete diffraktive Reliefstruktur weder auslöschen, verrunden oder in einer anderer Weise beeinträchtigen. Die Profilform der Reliefstruktur bleibt unverändert erhalten. Dabei wird die mindestens eine Farblackschicht auf einer verfestigten Replizierlackschicht gebildet, in welcher die diffraktive Reliefstruktur abgeformt ist.

Es ist bevorzugt, wenn eine Zusammensetzung zur Bildung einer Farblackschicht aus einem pigmentierten Farblack folgender Zusammensetzung gebildet wird:

| | |
|---|---|
| 0 - 50 Gew.-% | Wasser |
| 1 - 15 Gew.-% | Isopropanol |
| 1 - 25 Gew.-% | Farbpigment(e), insbesondere Mikrolith^{®} WA-Dispersion |
| 0,1 - 2 Gew.-% | Ammoniaklösung (25%) |
| 0,05 - 1 Gew.-% | Entschäumer |
| 25 - 90 Gew.-% | alkalische Acrylat-Dispersion (Polyacrylsäure-Copolymer) |
| 0,1 - 1 Gew.-% | Aziridin-Härter |

Die Polymer-Dispersion und/oder Polymer-Emulsion und/oder Polymer-Lösung fungiert hierbei insbesondere als Filmbildner. Dabei hat es sich bewährt, wenn als Polymer-Emulsion eine Acrylat-Polymer-Emulsion, eine Acrylat-Copolymer-Emulsion oder eine anionische Acrylat-Copolymer-Emulsion verwendet wird. Weiterhin hat es sich bewährt, wenn als Polymer-Dispersion eine Polyacrylsäure verwendet wird.

Es ist bevorzugt, wenn eine Zusammensetzung zur Bildung einer Farblackschicht aus einem Farblack mit Farbstoffen folgender Zusammensetzung gebildet wird (in g):

| | |
|---|---|
| Ethanol | 3500 |
| Ethylacetat | 3500 |
| n-Butanol | 400 |
| SMA-Harz (Molgewicht ca. 200.000 au, Säurezahl ca. 250) | 1000 |
| Alkohollösliches Cellulosenitrat (Norm 30 A) | 100 |
| Komplexfarbstoff Orange | 95 |
| Komplexfarbstoff Gelb | 40 |

Die Viskosität des Farblacks ist dabei so auf die Schichtdicke der Farblackschicht und die Form der Reliefstruktur abzustimmen, dass ein unerwünschtes Verlaufen des Farblacks über durch die Rasterung vorgegebene Grenzen der Farblackschicht hinaus unterbleibt. Der Farblack zeigt vorzugsweise thixotropes Verhalten, d. h. er verläuft nicht oder nur unwesentlich, nachdem er auf der Reliefstruktur aufgedruckt wurde.

Gemäß einer bevorzugten Weiterbildung der Erfindung liegt die Flächenbelegung der Reliefstruktur mit der Farblackschicht in einem Bereich von 5 bis 95 %, vorzugsweise von 25 bis 75 %, weiter vorzugsweise von 45 bis 55 %, der Gesamtfläche der Reliefstruktur. Mit anderen Worten sind vorzugsweise 5 bis 95%, vorzugsweise 25 bis 75 %, weiter vorzugsweise 45 bis 55 %, der Gesamtfläche der Reliefstruktur von der Farblackschicht bedeckt. Es hat sich herausgestellt, dass bei einer Flächenbelegung im Bereich von 50 % die besten Ergebnisse hinsichtlich einer gleichzeitigen Erkennbarkeit des diffraktiven Effekts als auch der farbigen Farblackschicht erzielt werden.

Die durch eine Verringerung der Flächenbelegung der Reliefstruktur mit der Farblackschicht hervorgerufene Abschwächung des Farbeindrucks kann durch eine Änderung des Farbtons des Farblacks in einem gewissen Grad ausgeglichen werden, nämlich durch ein stärkeres Einfärben des Lacks, d. h. durch eine höhere Sättigung und/oder eine dunklere Farbe. Unter diesem Aspekt wird in einer bevorzugten Ausgestaltung des Herstellungsverfahrens der zur Ausbildung der Farblackschicht verwendete Farblack umso stärker eingefärbt, je geringer die Flächenbelegung der Reliefstruktur mit der Farblackschicht ist.

Als Reliefstruktur kann jedes diffraktiv wirkende Oberflächenrelief dienen, z. B. eine asymmetrische Sägezahnstruktur (Blazestruktur), eine Kinoformstruktur, eine Kreuzgitterstruktur, eine isotrope oder anisotrope Mattstruktur, Freiformelemente, ein KINEGRAM^{®} oder Kombinationen der vorgenannten Reliefstrukturformen. Die Profilform der Reliefstruktur kann halbzylinderförmig, halbkugelförmig, trapezoidförmig oder dreieckförmig sein. In einer bevorzugten Ausgestaltung liegt die Tiefe der Reliefstruktur in einem Bereich von 50 bis 2000 nm, vorzugsweise von 100 bis 500 nm. Unter der Tiefe wird die maximale Höhendifferenz zwischen "Bergen und Tälern" der Reliefstruktur verstanden. Im Falle einer linienförmigen Sägezahnstruktur ist die Tiefe gleich der Zahnhöhe.

In einer bevorzugten Ausgestaltung ist die Reliefstruktur eine Linienstruktur mit einer Linienfrequenz in einem Bereich von 100 bis 1000 Linien/mm, vorzugsweise von 100 bis 500 Linien/mm. Je kleiner die Gitterkonstante einer Linienstruktur, d. h. der Abstand benachbarter Berge oder benachbarter Täler, desto eher wird das Relief einer solchen Linienstruktur durch eine überdruckte Farblackschicht verfüllt bzw. überbrückt. Die Schichtdicke der Farblackschicht ist auf die Linienfrequenz der Reliefstruktur abzustimmen, so dass das erwünschte Ergebnis erzielt wird. Insbesondere kann bei gröberen Strukturen, d. h. Strukturen mit geringer Linienfrequenz eine dickere Farblackschicht verwendet werden. Insbesondere kann bei feineren Strukturen, d. h. Strukturen mit höherer Linienfrequenz eine dünnere Lackschicht verwendet werden.

Gemäß einer bevorzugten Weiterbildung der Erfindung weisen die Replizierlackschicht und die Farblackschicht Brechungsindizes auf, deren Beträge sich um mindestens 0,1, insbesondere mindestens 0,2 unterscheiden. Diese bevorzugte Ausgestaltung der Erfindung nutzt die Erkenntnis, dass die Auslöschung des diffraktiven Effekts der Reliefstruktur durch die üblicherweise sehr ähnlichen Brechungsindizes von Replizierlack und Farblack verursacht und durch eine Wahl von Replizierlack und Farblack mit möglichst stark voneinander verschiedenen Brechungsindizes verhindert oder zumindest verringert werden kann.

Da die meisten Pigmente einen zum Lackbindemittel unterschiedlichen Brechungsindex aufweisen und dadurch der pigmentierte Lack insgesamt einen zum unpigmentierten Lack unterschiedlichen Brechungsindex aufweist, kann durch den Pigmentanteil in dem Farblack ein Brechungsindex der gesamten Farblackschicht eingestellt werden, der von dem Brechungsindex der Replizierlackschicht um eine gewünschte Differenz abweicht.

Gemäß einer bevorzugten Weiterbildung der Erfindung werden die Flächenbelegung der Reliefstruktur durch die Farblackschicht, die Dicke der Farblackschicht, die Tiefe und Frequenz der Reliefstruktur und die Brechungsindizes der Replizierlackschicht und der Farblackschicht so aufeinander abgestimmt und kombiniert, dass sich ein gewünschter optischer Effekt ergibt. Dabei sind folgende Faustregeln zu beachten:
- Je geringer die Flächenbelegung durch die Farblackschicht, desto größer ist die Fläche der "unverfüllten" Reliefstruktur und desto besser ist folglich der diffraktive Effekt sichtbar.
- Je geringer die Dicke der Farblackschicht, desto geringer ist die Reliefstruktur durch den Farblack verfüllt und desto besser ist folglich der diffraktive Effekt sichtbar.
- Je größer die Tiefe der Reliefstruktur und je größer der Abstand der Reliefelemente, desto geringer ist die Reliefstruktur durch den Farblack verfüllt und desto besser ist folglich der optische Effekt der Reliefstruktur sichtbar.
- Je größer die Differenz der Brechungsindizes von Replizierlackschicht und die Farblackschicht, desto stärker ist die Reflexion an der Grenzfläche von Replizierlack- und Farblackschicht und desto besser ist folglich der diffraktive Effekt sichtbar.

Gegenläufige Tendenzen können zum Ausgleich genutzt werden. Zum Beispiel erhöht sich durch einen relativ großen Brechungsindexunterschied von ca. 0,2 die Sichtbarkeit des diffraktiven Effekts in den mit Farblack überdruckten Bereichen der Reliefstruktur. Folglich kann man im Gegenzug die Flächenbelegung durch den Farblack etwas erhöhen, ohne dass die Sichtbarkeit des diffraktiven Effekts in der Summe sich substantiell verschlechtert.

In einer bevorzugten Ausgestaltung weist die Folie auf einer zweiten Seite der Replizierlackschicht eine Schutzlackschicht auf, welche die unter ihr angeordneten Schichten wie Replizierlackschicht, Farblackschicht und Reflexionsschicht vor schädlicher mechanischer und chemischer Einwirkung schützt. Dabei kann es sich um eine einzige oder auch um mehrere übereinander aufgebrachte Lackschichten handeln. Vorzugsweise weist je eine der Schutzlackschichten eine Dicke von 1 bis 5 µm auf.

Eine solche Schutzlackschicht kann beispielsweise aus einem Lack folgender Zusammensetzung gebildet werden (in g):

| | |
|---|---|
| Methylethylketon | 4000 |
| Butanol | 300 |
| Acrylpolymer auf Basis Methylmetacrylat (Molgewicht ca. 250.000-300.000 au) | 1500 |

In einer bevorzugten Ausgestaltung weist die Folie auf der ersten Seite der Replizierlackschicht eine Klebstoffschicht auf, welche die Replizierlackschicht, die Farblackschicht und die Reflexionsschicht bedeckt. Diese Klebstoffschicht kann in dem Herstellungsverfahren nach dem Schritt c) auf die erste Seite der Replizierlackschicht aufgedruckt werden.

Mittels dieser Klebstoffschicht kann die gesamte Schichtenfolge der Folie fest mit einem Substrat, z. B. einem Sicherheitspapier, insbesondere Banknotenpapier, einem Wertdokument, einer Produktoberfläche oder einer Produktverpackung verbunden werden, so dass ein Versuch einer Ablösung der Folie zu deren Zerstörung führt. Die Klebstoffschicht kann eine Dicke von 1 bis 10 µm aufweisen. Handelt es sich dabei um einen thermisch aktivierbaren Klebstoff, kann das Folienelement in einem Heißprägeverfahren auf ein Substrat aufgeklebt werden.

Alternativ kann die Folie Teil einer Transferfolie sein, wie sie für die Herstellung von Sicherheitselementen eingesetzt werden. Die Transferfolie weist dabei eine Trägerfolie und die von der Trägerfolie ablösbare Folie nach einem der Ansprüche 1 bis 11 in Form einer Übertragungslage auf. In diesem Fall wird der Schichtaufbau der Übertragungslage auf der Trägerfolie vorbereitet und anschließend in einem Heißprägeverfahren in den gewünschten Umrisskonturen auf ein Sicherheitspapier bzw. ein Wertdokument wie eine Banknote, eine Ausweiskarte oder dergleichen übertragen. Die Trägerfolie ist ganz allgemein ein bedruckbares bahnförmiges Material, beispielsweise eine Kunststofffolie aus Polyethylen, Polypropylen, Polyvinylacetat, Polyamid, Polyester, Polyethylenterephthalat oder ähnlichen Stoffen. Die Dicke der Trägerfolie beträgt vorzugsweise 6 bis 250 µm, weiter vorzugsweise 10 bis 50 µm. Die Ablösbarkeit der Übertragungslage von der Trägerfolie kann durch eine zwischen der Trägerfolie und der Übertragungslage angeordnete Ablöseschicht erreicht werden. Die Ablöseschicht ist beispielsweise eine wachsartige Schicht und hat vorzugsweise eine Dicke von 0,01 bis 0,5 µm.

Darüber hinaus kann die Folie weitere Sicherheitsmerkmale, wie einen Dünnschichtaufbau, ein Druckbild oder Ähnliches aufweisen. Wird die Folie in Form eines Sicherheitselements auf der Oberfläche eines Sicherheitspapiers bzw. Wertdokuments angeordnet, so kann sie beliebige Umrissstrukturen, wie beispielsweise runde, ovale, sternförmige, rechteckige, trapezförmige oder streifenförmige Umrisskonturen aufweisen.

Gemäß einer bevorzugten Ausführungsform weist das Sicherheitspapier bzw. das Wertdokument, auf welches die Folie in Form eines Sicherheitselements aufgebracht wird, eine durchgehende Öffnung oder einen transparenten Bereich auf. Das Sicherheitselement wird hierbei im Bereich der Öffnung oder des transparenten Bereichs angeordnet und überragt diese insbesondere allseitig. In diesem Fall wird das Sicherheitselement von der Vorder- und der Rückseite überprüfbar. Dabei ist es besonders vorteilhaft, wenn die Klebstoffschicht möglichst transparent ist, sodass die Reflexionsschicht von ihrer Rückseite her sichtbar ist. Durch die beidseitige Betrachtungsmöglichkeit des Sicherheitselements ist erkennbar, dass das Sicherheitselement auf der Vorderseite ein anderes Design als auf der Rückseite aufweist. Auf der Vorderseite ist die Reflexionsschicht bereichsweise mit der Farblackschicht bedeckt und das Sicherheitselement dadurch zweifarbig ausgebildet. Auf der Rückseite ist die Farblackschicht vollflächig oder bereichsweise von der Reflexionsschicht abgedeckt, sodass sich dadurch auf der Rückseite des Sicherheitselements ein anderer optischer Eindruck ergibt. Dies stellt eine besonders prägnante und auffällige Eigenschaft des Sicherheitselements dar.

Gemäß einer bevorzugten Ausführungsform erfolgt das Verfahren von Rolle zu Rolle, d. h. in einem kontinuierlichen Verfahren, vorzugsweise unter Verwendung von Druckzylindern, mit denen sukzessive einzelne Schichten der Folie bzw. der Transferfolie auf eine Trägerfolie aufgebracht werden. Dabei können einzelne Schichten der Folie, insbesondere die Farblackschicht, gedruckt werden, vorzugsweise in Tief-, Sieb- oder Flexodruck.

In einer bevorzugten Ausgestaltung wird zunächst die Replizierlackschicht auf eine Trägerfolie aufgedruckt, bevor die Reliefstruktur in der Replizierlackschicht ausgebildet wird. Die Ausbildung der Reliefstruktur kann in einem thermischen Replikationsverfahren mittels einer beheizten Replizierwalze erfolgen, die ihr Relief in die Replizierlackschicht einprägt. Optional kann noch vor dem Aufdrucken der Replizierlackschicht eine Ablöseschicht auf die Trägerfolie aufgedruckt werden.

Bei dem erfindungsgemäßen Verfahren können zwar, z. B. bei einer thermischen Replikation der diffraktiven Reliefstruktur, nichtlineare Verzüge der Folie auftreten, jedoch passiert das vor dem Aufbringen des Farblacks. Dadurch ist es relativ einfach, eine geforderte Registertoleranz einzuhalten, weil bei dem Farblackdruck, insbesondere Tiefdruck, Siebdruck oder Flexodruck, kaum Wärme auf die Folie einwirkt. Die nichtlinearen Verzüge auf der Folie können vor dem Drucken des Farblacks gemessen oder sensorisch erfasst werden und ggf. durch Justierung der Druckwalzen oder anderer Elemente ausgeglichen werden. Beispielsweise kann ein Schrägverzug der Folie auf diese Weise ausgeglichen werden.

In einer bevorzugten Ausgestaltung wird die Farblackschicht im Register zu der Reliefstruktur angeordnet, vorzugsweise mittels eines Druckverfahrens. Die Registergenauigkeit, auch Registertoleranz genannt, liegt dabei vorzugsweise in einem Bereich von 100 bis 1000 µm, bevorzugt von 200 bis 600 µm. Bei Sicherheitsanwendungen im Bereich von Wertdokumenten ist eine Registertoleranz von höchstens 1 mm unabdingbar. Dabei hat es sich als vorteilhaft herausgestellt, wenn eine Regelung von Registertoleranzen mittels optisch detektierbarer Registermarken erfolgt. Diese Registermarken können in einem ersten Schritt auf die von einer Vorratsrolle abgewickelte Trägerfolie aufgebracht werden, z. B. durch Drucken oder Stanzen, und während der weiteren Herstellungsschritte stets als Bezugspunkt dienen.

Auf diese Weise kann ein durch eine thermische Replikation der diffraktiven Reliefstruktur hervorgerufener Verzug der Replizierlackschicht durch eine optische Detektion der auf der Trägerfolie angeordneten Registermarke erkannt und durch eine korrigierende Justierung einer Druckwalze oder eines Förderelements ausgeglichen wird.

Vorzugsweise liegt die Gesamt-Transparenz der oberhalb der Reflexionsschicht liegenden Schichten Schutzlackschicht + Replizierlackschicht + Farblackschicht bei 50 %, insbesondere 80 %, von einfallendem sichtbaren Licht im Wellenlängenbereich von 380 bis 780 nm.

Im Folgenden wird die Erfindung anhand mehrerer Ausführungsbeispiele unter Zuhilfenahme der beiliegenden Zeichnung erläutert. Die Darstellungen sind dabei schematisiert und entsprechen nicht den tatsächlichen Größenverhältnissen und Proportionen. Es zeigen:
- Fig. 1: ein erfindungsgemäßes Wertdokument,
- Fig. 2: einen Schnitt durch eine erfindungsgemäße Folie entlang der Linie II - II,
- Fig. 3: ein Detail des Schichtaufbaus einer erfindungsgemäßen Folie mit einer relativ dünnen Farblackschicht,
- Fig. 4: ein Detail des Schichtaufbaus einer erfindungsgemäßen Folie mit einer relativ dicken Farblackschicht,
- Fig. 5: einen Schnitt durch eine erfindungsgemäße Transferfolie,
- Fig. 6: einen Schnitt durch eine erfindungsgemäße Folie mit vier unterschiedlichen Bereichen,
- Fig. 7: eine Draufsicht auf eine Reliefstruktur mit einer Farblackschicht in Form eines Linienrasters, und
- Fig. 8: eine Draufsicht auf eine Reliefstruktur mit einer Farblackschicht in Form eines Punktrasters.

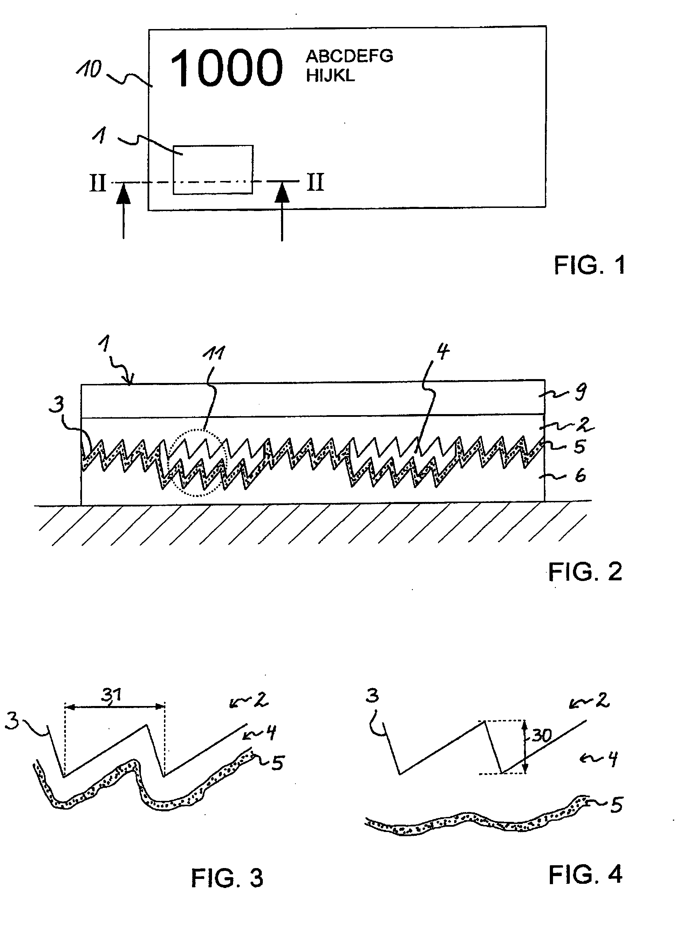

Fig. 1 zeigt ein erfindungsgemäßes Wertdokument in Aufsicht. Im gezeigten Beispiel handelt es sich um eine Banknote 10 mit einer Wertangabe und einem weiteren Aufdruck auf der Vorderseite der Banknote 10. Die Banknote weist außerdem unterhalb der Wertangabe ein rechteckförmiges Sicherheitselement 1 auf, das auf die Oberfläche des Banknotenpapiers aufgeklebt ist.

Bei dem in Fig.1 dargestellten Sicherheitselement 1 handelt es sich um ein Folienelement, welches eine Replizierlackschicht mit einer diffraktiven Reliefstruktur, z. B. in Form eines Oberflächenhologramms, eine transparente Farblackschicht und eine metallische Reflexionsschicht aufweist.

Fig. 2 zeigt einen Querschnitt durch das Sicherheitselement 1 entlang der Linie II - II in Fig. 1. Es ist die Replizierlackschicht 2 zu erkennen, in deren dem Banknotenpapier 10 zugewandten Seite die diffraktive Reliefstruktur 3 abgeformt ist. Dabei handelt es sich um eine Linienstruktur in Form eines asymmetrischen Sägezahnmusters. Eine bevorzugte Tiefe, d. h. Höhendifferenz Tal zu Berg, der Linienstruktur liegt im Bereich von 300 nm.

Unmittelbar auf der Reliefstruktur 3 ist lediglich bereichsweise die transparente Farblackschicht 4 angeordnet. Die gesamte Reliefstruktur 3 zusammen mit der Farblackschicht 4 ist von einer reflektierenden Metallschicht 5 bedeckt, die mittels Vakuumbedampfen oder Sputtern aufgebracht wurde. Zum Beispiel handelt es sich um eine aufgedampfte Aluminiumschicht mit einer Dicke von 40 nm.

Die Metallschicht 5 bedeckt die Farblackschicht 4 und verbessert durch ihre Reflexionswirkung die Sichtbarkeit der diffraktiven optischen Wirkung des Folienelements 1. Auf der dem Banknotenpapier 10 abgewandten Seite der Replizierlackschicht 2 ist eine transparente oder transluzente Schutzlackschicht 9 aufgedruckt, welche den darunter angeordneten Schichten 2, 4, 5 Schutz vor mechanischer und chemischer Einwirkung bietet. Die gesamte Schichtenfolge 2, 4, 5, 9 ist mittels einer Klebstoffschicht 6 so fest mit dem Banknotenpapier 10 verbunden, dass ein Versuch einer Ablösung des Folienelement 1 zu dessen Zerstörung führt.

Ein Betrachter betrachtet das Sicherheitselement 1 im Auflicht, das durch die Schutzlackschicht 9, die Replizierlackschicht 2 und bereichsweise die Farblackschicht 4 hindurch bis zur Reflexionsschicht 5 läuft. Der Großteil des an der Reflexionsschicht 5 ankommenden Lichts wird an der Reflexionsschicht 5 gemäß ihrem Reflexionsgrad reflektiert und durchläuft die Schichten 4, 2, 9 des Folienelements 1 in entgegengesetzter Richtung. Das in das Auge des Betrachters einfallende Licht besteht einerseits aus einem ersten Anteil, der aus Bereichen mit Farblackschicht 4 stammt, und aus einem zweiten Anteil, der aus Bereichen ohne Farblackschicht 4 stammt. Der erste Lichtanteil enthält eine Farbkomponente gemäß der Farblackschicht 4. Der zweite Lichtanteil enthält Farbkomponenten gemäß der durchlaufenen Schutzlackschicht 9 und Replizierlackschicht 2, hat aber keine von der Farblackschicht 4 herrührende Farbkomponente.

Fig. 3 zeigt im Bereich eines in Fig. 2 angegebenen Ausschnitts 11 der Folie 1 ein erstes Ausführungsbeispiel der transparenten Farblackschicht 4. Die Farblackschicht 4 ist so dünn auf die diffraktive Reliefstruktur 3 aufgetragen, dass die Täler der Reliefstruktur 3 nur teilweise verfüllt wurden. Dabei weist die Farblackschicht 4 an der der Reliefstruktur 3 abgewandten Seite der Farblackschicht 4 Merkmale der Reliefstruktur 3 auf, wie die Relieffrequenz 31 sowie im wesentlichen auch die Relieftiefe 30. Für eine derartige Ausgestaltung der Farblackschicht 4 ist die Tiefe und Frequenz 31 der Reliefstruktur 3 auf die Dicke der Farblackschicht 4 abzustimmen. Beispielsweise liegt die Relieftiefe in einem Bereich von 300 nm, während die Farblackschicht eine Dicke in einem Bereich von 200 nm aufweist.

Fig. 4 zeigt, ebenfalls im Bereich des in Fig. 2 angegebenen Ausschnitts 11 der Folie 1, ein zweites Ausführungsbeispiel der transparenten Farblackschicht 4. Die Farblackschicht 4 ist so dick auf die diffraktive Reliefstruktur 3 aufgetragen, dass die Täler der Reliefstruktur 3 vollständig verfüllt wurden. Dabei sind an der der Reliefstruktur 3 abgewandten Seite der Farblackschicht 4 die Relieffrequenz 31 lediglich schwach, die Relieftiefe 30 aufgrund der vollständigen Verfüllung der Reliefstruktur 3 überhaupt nicht mehr zu erkennen. Beispielsweise liegt die Relieftiefe 30 in einem Bereich von 300 nm, während die Farblackschicht eine Dicke in einem Bereich von 3000 nm aufweist.

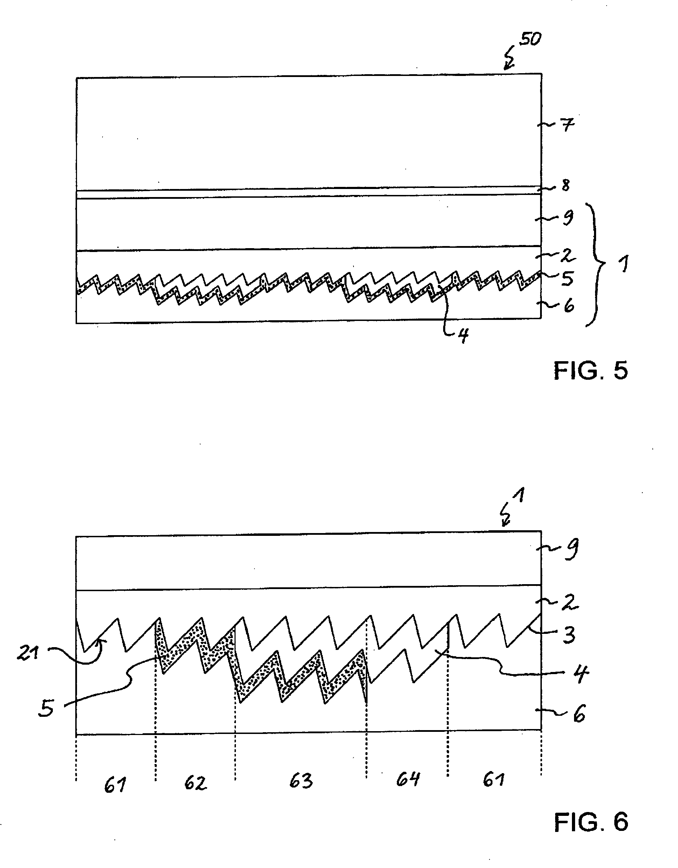

Fig. 5 zeigt einen Schnitt durch eine erfindungsgemäße Transferfolie 50 bestehend aus einer Trägerschicht 7 und einer Übertragungslage 1, zwischen denen eine Ablöseschicht 8 angeordnet ist. Die Übertragungslage 1 ist analog zu der in Fig. 2 gezeigten Folie 1 ausgebildet, umfassend in dieser Reihenfolge eine unmittelbar an die Ablöseschicht 8 angrenzende Schutzlackschicht 9, eine Replizierlackschicht 2, eine partielle Farblackschicht 4, eine Reflexionsschicht 5 sowie eine Klebstoffschicht 6.

Die Transferfolie 50 wird unter Hitzeeinwirkung auf ein Substrat aufgedrückt, so dass die Klebstoffschicht 6 aktiviert wird und sich mit dem Substrat verbindet. Danach wird die Trägerfolie 7 von der Übertragungslage 1 abgezogen, die als Sicherheitselement auf dem Substrat verbleibt.

Fig. 6 zeigt einen Schnitt durch eine erfindungsgemäße Folie 1, ähnlich zu der in Fig. 2 gezeigten Folie. Fig. 6 zeigt dabei vier verschiedenen Möglichkeiten der Ausbildung der Farblackschicht 4 und der Reflexionsschicht 5.

In einem ersten Bereich 61 liegt weder die Farblackschicht 4 noch die Reflexionsschicht 5 vor, sodass die Klebstoffschicht 6 unmittelbar an die Reliefstruktur 3 angrenzt. In vielen Fällen weisen gebräuchliche Klebstoffschichten einen zu üblichen Replizierlackschichten sehr ähnlichen Brechungsindex, insbesondere mit einem Unterschied kleiner 0,1 auf. Dadurch kann in dem ersten Bereich 61 das Auslöschen der optischen Wirkung der Reliefstruktur 3 durch die direkt benachbarte Klebstoffschicht 6 erfolgen.

In einem zweiten Bereich 62 ist lediglich die Reflexionsschicht 5 ausgebildet, welche unmittelbar auf der Reliefstruktur 3 angeordnet ist. Auf der von der Replizierlackschicht 2 abgewandten Seite der Reflexionsschicht 5 ist die Klebstoffschicht 6 angeordnet.

Ein dritter Bereich 63 zeigt eine Ausgestaltung, bei der die Farblackschicht 4 und die Reflexionsschicht 5 übereinander liegen. Da die Reflexionsschicht 5 erst nach dem Auftragen der Farblackschicht 4 aufgebracht wird, ist in diesem Fall die Farblackschicht 4 zwischen der Replizierlackschicht 2 und der Reflexionsschicht 5 angeordnet. Dadurch färbt die Farblackschicht 4 die Reflexionsschicht 5 auf der zur Replizierlackschicht 2 weisenden Seite ein. Auf der von der Farblackschicht 4 abgewandten Seite der Reflexionsschicht 5 ist die Klebstoffschicht 6 angeordnet. Die Reflexionsschicht 5 ist daher auf der zur Klebstoffschicht 6 weisenden Seite nicht von der Farblackschicht 4 eingefärbt.

Ein vierter Bereich 64 zeigt einen Fall, in dem lediglich die Farblackschicht 4 vorliegt, welche unmittelbar an die Replizierlackschicht 2 angrenzt. Auf der von der Replizierlackschicht 2 abgewandten Seite der Farblackschicht 4 ist die Klebstoffschicht 6 angeordnet. Da in bevorzugten Ausführungen im Bereich 64 alle auf einem Substrat aufliegenden Schichten 9, 2, 4, 6 transparent sind, färbt die eingefärbte transparente Farblackschicht 4 praktisch das an die Klebstoffschicht 6 angrenzende Substrat ein oder überlagert eine vorhandene Farbe des Substrats.

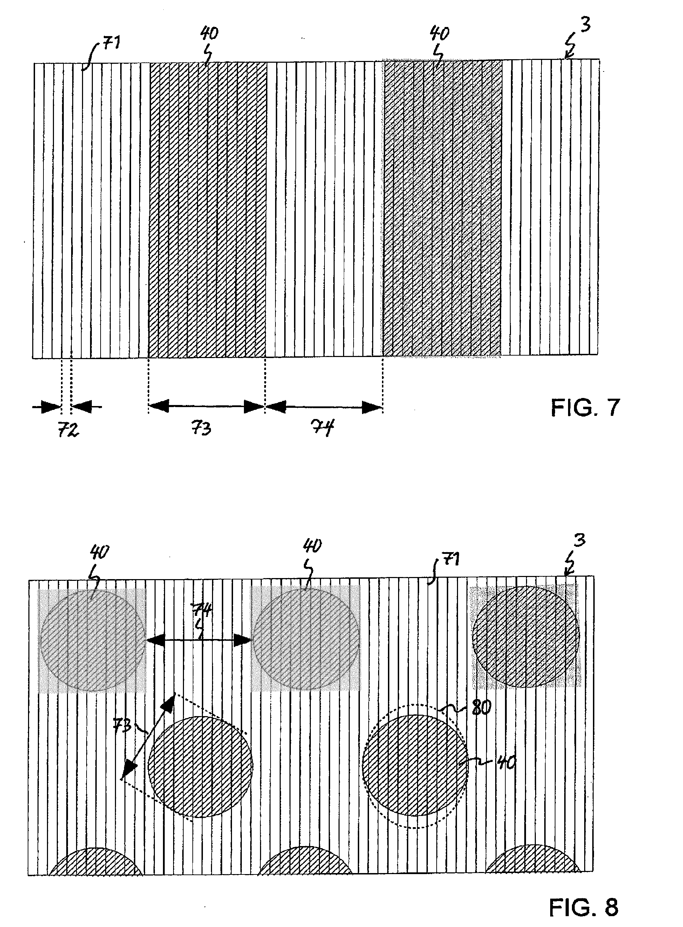

Fig. 7 zeigt eine Draufsicht auf eine diffraktive Reliefstruktur 3, die in Form einer Linienstruktur 71, z. B. einer asymmetrischen Sägezahnstruktur, ausgebildet ist. Dabei weisen die einzelnen Linienelemente 71 voneinander einen Abstand 72 auf. Auf diese Reliefstruktur 3 ist nun eine Farblackschicht aufgedruckt, in Form von Streifen 40 mit einer Breite 73 und einem gegenseitigem Abstand 74. Bevorzugte Werte für die Breite 73 und den Abstand 74 der Linienstruktur 3 liegen im Bereich von 150 bis 200 µm. In dem vorliegenden Beispiel ist sowohl die Linienbreite 73 als auch der Abstand 74 der Farblackelemente 40 so festgelegt, dass sie jeweils zwölf Linienelemente 71 der Reliefstruktur 3 umfassen. Geht man von einer Frequenz der Reliefstruktur, d. h. einem Abstand 72 benachbarter Linienelemente 71, im Bereich von ca. 10 µm aus, so beträgt sowohl die Breite 73 als auch der Abstand 74 jeweils ca. 120 µm.

Fig. 8 zeigt eine Draufsicht auf eine diffraktive Reliefstruktur 3, ähnlich wie in Fig. 7. Im Unterschied zu der in Fig. 7 dargestellten Ausführung hat die in Fig. 8 gezeigte Farblackschicht die Form eines Punktrasters 40. Auch in diesem Falle ist eine Breite 73 der Einzelelemente 40 der Farblackschicht sowie ein gegenseitiger Abstand 74 der Einzelelemente der Farblackschicht definierbar. Der Durchmesser 73 und der Abstand 74 sind vorzugsweise so gewählt, dass sie unterhalb des Auflösungsvermögens des bloßen menschlichen Auges liegen. Auf diese Weise erscheint einem Betrachter die Farblackschicht, gebildet aus den Einzelelementen 40, als eine lückenlose Farbschicht.

Das Auflösungsvermögen des bloßen Auges ist unter anderem abhängig von dem Kontrast zwischen den einzelnen Farblackschichtelementen 40 und einer dazwischen sichtbaren Reflexionsschicht. Je geringer der Helligkeitskontrast zwischen einem einzelnen Farblackschichtelement und einer daneben sichtbaren Reflexionsschicht ist, desto schwieriger ist es für einen Betrachter, diese beiden unterschiedlichen Schichten als solche zu erkennen, d. h. optisch aufzulösen. Ist die Farblackschicht beispielsweise gelb eingefärbt und die Reflexionsschicht als eine silbern erscheinende Aluminiumschicht ausgebildet, so ist der Helligkeitskontrast zwischen diesen beiden Schichten relativ gering, was den Eindruck einer lückenlosen Farblackschicht verstärkt.

Beim Aufdrucken der Farblackschicht ist zu beachten, dass die Linienstruktur 71 eine Kapillarwirkung auf den Farblack in Richtung der Linien 71 ausüben kann, so dass die Farblackelemente entlang der Linien 71 eine Verbreiterung relativ zu der Richtung senkrecht zu den Linien 71 erfahren, die im Bereich von 15 bis 35 % liegt. Angewandt auf die Punktelemente 40 der Fig. 8 ergäben sich somit ellipsenförmige Elemente 40, wie in Fig. 8 durch die gestrichelte Form 80 angedeutet.

### Bezugszeichenliste

- 1: Folie
- 2: Replizierlackschicht
- 3: Reliefstruktur
- 4: Farblackschicht
- 5: Reflexionsschicht
- 6: Klebstoffschicht
- 7: Trägerfolie
- 8: Ablöseschicht
- 9: Schutzlackschicht
- 10: Wertdokument
- 11: Ausschnitt
- 21: erste Seite der Replizierlackschicht
- 30: Tiefe der Reliefstruktur
- 31: Frequenz der Reliefstruktur
- 40: Muster- oder Rasterelement
- 50: Transferfolie
- 61: erster Bereich
- 62: zweiter Bereich
- 63: dritter Bereich
- 64: vierter Bereich
- 71: Linienstruktur
- 73: Linienbreite, Punkt- oder Einzelelement-Durchmesser
- 74: Abstand
- 80: elliptische Form

## Patentansprüche

1. Folie (1), welche eine lichtdurchlässige Replizierlackschicht (2) mit einer in einer ersten Seite (21) der Replizierlackschicht (2) ausgebildeten diffraktiven Reliefstruktur (3), eine auf der Reliefstruktur (3) angeordnete, lediglich bereichsweise ausgebildete, lichtdurchlässige Farblackschicht (4) und eine auf der ersten Seite (21) der Replizierlackschicht (2) angeordnete, zumindest bereichsweise ausgebildete Reflexionsschicht (5) umfasst, wobei in Bereichen (63) der Folie (1), in denen die Farblackschicht (4) und die Reflexionsschicht (5) übereinander liegen, die Farblackschicht (4) zwischen der Replizierlackschicht (2) und der Reflexionsschicht (5) angeordnet ist, wobei
die Farblackschicht (4) muster- oder rasterförmig ausgebildet ist, **dadurch gekennzeichnet, dass**
i) benachbarte Muster- oder Rasterelemente (40) der Farblackschicht (4) einen gegenseitigen Abstand (74) aufweisen, der in einem Bereich von 50 bis 250 µm, vorzugsweise von 70 bis 200 µm, liegt, und/oder dass
ii) eine Linienbreite, ein Punktdurchmesser oder ein Einzelelement-Durchmesser (73) der Muster- oder Rasterelemente (40) in einem Bereich von 50 bis 250 µm, vorzugsweise von 70 bis 200 µm, liegt.

2. Folie (1) nach Anspruch 1,
**dadurch gekennzeichnet,**
**dass** die Farblackschicht (4) eine Dicke in einem Bereich von 0,1 bis 6 µm, vorzugsweise von 0,2 bis 4 µm, aufweist und/oder dass die Flächenbelegung der Reliefstruktur (3) mit der Farblackschicht (4) in einem Bereich von 5 bis 95 %, vorzugsweise von 25 bis 75 %, weiter vorzugsweise von 45 bis 55 %, der Gesamtfläche der Reliefstruktur (3) liegt, und/oder dass die Tiefe (30) der Reliefstruktur (3) in einem Bereich von 50 bis 1000 nm, vorzugsweise von 100 bis 500 nm, liegt, und/oder dass die Reliefstruktur (3) eine Linienstruktur (71) mit einer Linienfrequenz (31) in einem Bereich von 100 bis 1000 Linien/mm, vorzugsweise von 100 bis 500 Linien/mm, ist.

3. Folie (1) nach einem der vorhergehenden Ansprüche,
**dadurch gekennzeichnet,**
**dass** die Replizierlackschicht (2) und die Farblackschicht (4) Brechungsindizes aufweisen, deren Beträge sich um mindestens 0,1 unterscheiden.

4. Folie (1) nach einem der vorhergehenden Ansprüche,
**dadurch gekennzeichnet,**
**dass** die Folie (1) auf einer zweiten Seite der Replizierlackschicht (2) eine Schutzlackschicht (9) aufweist.

5. Folie (1) nach einem der vorhergehenden Ansprüche,
**dadurch gekennzeichnet,**
**dass** die Folie (1) auf der ersten Seite (21) der Replizierlackschicht (2) eine Klebstoffschicht (6) aufweist, welche die Replizierlackschicht (2), die Farblackschicht (4) und die Reflexionsschicht (5) bedeckt.

6. Sicherheitspapier für die Herstellung von Wertdokumenten (10), das wenigstens eine Folie (1) nach einem der Ansprüche 1 bis 5 in Form eines Sicherheitselements aufweist.

7. Wertdokument (10) wie eine Banknote, Ausweiskarte oder dergleichen, das wenigstens eine Folie (1) nach einem der Ansprüche 1 bis 5 in Form eines Sicherheitselements aufweist.

8. Transferfolie (50) für die Herstellung von Sicherheitselementen, die eine Trägerfolie (7) und eine von der Trägerfolie (7) ablösbare Folie (1) nach einem der Ansprüche 1 bis 5 in Form einer Übertragungslage aufweist.

9. Transferfolie (50) nach Anspruch 8,
**dadurch gekennzeichnet,**
**dass** zwischen der Trägerfolie (7) und der Übertragungslage (1) eine Ablöseschicht (8) angeordnet ist.

10. Verfahren zur Herstellung einer Folie (1) nach einem der Ansprüche 1 bis 5, wobei
a) in einer ersten Seite (21) einer lichtdurchlässigen Replizierlackschicht (2) eine diffraktive Reliefstruktur (3) ausgebildet wird,
b) nach dem Schritt a) auf die Reliefstruktur (3) lediglich bereichsweise eine lichtdurchlässige Farblackschicht (4) aufgetragen wird, sodass die Farblackschicht (4) muster- oder rasterförmig ausgebildet ist, wobei
i) benachbarte Muster- oder Rasterelemente (40) der Farblackschicht (4) einen gegenseitigen Abstand (74) aufweisen, der in einem Bereich von 50 bis 250 µm, vorzugsweise von 70 bis 200 µm, liegt, und/oder
ii) eine Linienbreite, ein Punktdurchmesser oder ein Einzelelement-Durchmesser (73) der Muster- oder Rasterelemente (40) in einem Bereich von 50 bis 250 µm, vorzugsweise von 70 bis 200 µm, liegt und
c) nach dem Schritt b) auf die erste Seite (21) der Replizierlackschicht (2) zumindest bereichsweise eine Reflexionsschicht (5) aufgebracht wird, vorzugsweise in Form einer Metallschicht.

11. Verfahren nach Anspruch 10,
**dadurch gekennzeichnet,**
**dass** das Verfahren Rolle-zu-Rolle erfolgt und/oder dass die Farblackschicht (4) gedruckt wird, vorzugsweise in Tief-, Sieb- oder Flexodruck.

12. Verfahren nach Anspruch 10 oder 11,
**dadurch gekennzeichnet,**
**dass** die Farblackschicht (4) im Register zu der Reliefstruktur (3) angeordnet wird, mit einer Registertoleranz in einem Bereich von 100 bis 1000 µm, bevorzugt von 200 bis 600 µm.

13. Verfahren nach einem der Ansprüche 10 bis 12,
**dadurch gekennzeichnet,**
**dass** der zur Ausbildung der Farblackschicht (4) verwendete Farblack umso stärker eingefärbt wird, je geringer die Flächenbelegung der Reliefstruktur (3) mit der Farblackschicht (4) ist.

14. Verfahren nach einem der Ansprüche 10 bis 13,
**dadurch gekennzeichnet,**
**dass** vor dem Schritt a) die Replizierlackschicht (2) auf eine Trägerfolie (7) aufgedruckt wird, wobei bevorzugt
ein durch eine thermische Replikation der diffraktiven Reliefstruktur (3) hervorgerufener Verzug der Replizierlackschicht (2) durch eine optische Detektion einer auf der Trägerfolie (7) angeordneten Registermarke erkannt und durch eine Justierung einer Druckwalze oder eines Förderelements ausgeglichen wird.

15. Verfahren nach einem der Ansprüche 10 bis 14,
**dadurch gekennzeichnet,**
**dass** in dem Schritt c) die Reflexionsschicht (5) teilweise entfernt wird, vorzugsweise durch ein Demetallisierungsverfahren.

## Claims

1. Film (1), which comprises a light-permeable replicating lacquer layer (2) having a diffractive relief structure (3) formed in a first side (21) of the replicating lacquer layer (2), a light-permeable coloured lacquer layer (4) that is arranged on the relief structure (3) and is only formed in certain regions, and a reflective layer (5) that is arranged on the first side (21) of the replicating lacquer layer (2) and is formed at least in certain regions, wherein, in regions (63) of the film (1) in which the coloured lacquer layer (4) and the reflective layer (5) lie above each other, the coloured lacquer layer (4) is arranged between the replicating lacquer layer (2) and the reflective layer (5), wherein
the coloured lacquer layer (4) is designed to be patterned or grid-shaped,
**characterised in that**,
i) adjacent patterned or grid elements (40) of the coloured lacquer layer (4) have a mutual spacing (74) which ranges from 50 to 250µm, preferably from 70 to 200µm, and/or
ii) a line width, a spot diameter or an individual element diameter (73) of the patterned or grid elements (40) range from 50 to 250µm, preferably from 70 to 200µm.

2. Film (1) according to claim 1,
**characterised in that**,
the coloured lacquer layer (4) has a thickness ranging from 0.1 to 6µm, preferably from 0.2 to 4µm, and/or the surface occupancy of the relief structure (3) by the coloured lacquer layer (4) ranges from 5 to 95%, preferably from 25 to 75%, even more preferably from 45 to 55%, of the total surface of the relief structure (3), and/or the depth (30) of the relief structure (3) ranges from 50 to 1000nm, preferably from 100 to 500nm, and/or the relief structure (3) is a linear structure (71) having a linear frequency (31) ranging from 100 to 1000 lines/mm, preferably from 100 to 500 lines/mm.

3. Film (1) according to one of the preceding claims,
**characterised in that**,
the replicating lacquer layer (2) and the coloured lacquer layer (4) have refractive indices whose values differ by at least 0.1.

4. Film (1) according to one of the preceding claims,
**characterised in that**,
the film (1) has a protective lacquer layer (9) on a second side of the replicating lacquer layer (2).

5. Film (1) according to one of the preceding claims,
**characterised in that**,
the film (1) has an adhesive layer (6) on the first side (21) of the replicating lacquer layer (2), said adhesive layer covering the replicating lacquer layer (2), the coloured lacquer layer (4) and the reflective layer (5).

6. Security paper for the production of documents of value (10), which has at least one film (1) according to one of claims 1 to 5 in the form of a security element.

7. Document of value (10) such as a bank note, identity card or suchlike, which has at least one film (1) according to one of claims 1 to 5 in the form of a security element.

8. Transfer film (50) for the production of security elements, which has a carrier film (7) and a film (1) that can be detached from the carrier film (7) according to one of claims 1 to 5 in the form of a transfer layer.

9. Transfer film (50) according to claim 8,
**characterised in that**,
a detachment layer (8) is arranged between the carrier film (7) and the transfer layer (1).

10. Method for the production of a film (1) according to one of claims 1 to 5, wherein,
a) a diffractive relief structure (3) is formed in a first side (21) of a light-permeable replicating lacquer layer (2),
b) after step a), a light-permeable coloured lacquer layer (4) is applied to the relief structure (3)only in certain regions, such that the coloured lacquer layer (4) is formed to be patterned or grid-like, wherein
i) adjacent patterned or grid elements (40) of the coloured lacquer layer (4) have a mutual spacing (74) which ranges from 50 to 250µm, preferably from 70 to 200µm, and/or
ii) a line width, a spot diameter or an individual element diameter (73) of the patterned or grid elements (40) range from 50 to 250µm, preferably from 70 to 200µm, and
c) after step b), a reflective layer (5) is applied, at least in certain regions, to the first side (21) of the replicating lacquer layer (2), preferably in the form of a metallic layer.

11. Method according to claim 10,
**characterised in that**,
the roll-to-roll processing method takes place and/or the coloured lacquer layer (4) is printed, preferably in gravure printing, screen printing or flexographic printing.

12. Method according to claim 10 or 11,
**characterised in that**,
the coloured lacquer layer (4) is arranged in register with the relief structure (3) with a register tolerance ranging from 100 to 1000µm, preferably from 200 to 600µm.

13. Method according to one of claims 10 to 12,
**characterised in that**,
the coloured lacquer used for the formation of the coloured lacquer layer (4) is coloured more intensely the smaller the surface occupancy of the relief structure (3) by the coloured lacquer layer (4) is.

14. Method according to one of claims 10 to 13,
**characterised in that**,
before step a), the replicating lacquer layer (2) is imprinted onto a carrier film (7), wherein, preferably,
warping of the replicating lacquer layer (2) caused by a thermal replication of the diffractive relief structure (3) is detected by an optical detection of a register mark arranged on the carrier film (7) and is compensated for by an adjustment of a print roller or of a conveying element.

15. Method according to one of claims 10 to 14,
**characterised in that**,
in step c), the reflective layer (5) is partially removed, preferably by a demetallisation method.

## Revendications

1. Feuille (1) qui comprend une couche de vernis de reproduction (2) translucide comportant une structure en relief (3) diffractive formée dans un premier côté (21) de la couche de vernis de reproduction (2), une couche de vernis coloré (4) translucide disposée sur la structure en relief (3), formée au moins par endroits, et une couche réfléchissante (5) disposée sur le premier côté (21) de la couche de vernis de reproduction (2) formée au moins par endroits, dans laquelle, dans des zones (63) de la feuille (1) dans lesquelles la couche de vernis coloré (4) et la couche réfléchissante (5) sont superposées, la couche de vernis coloré (4) est disposée entre la couche de vernis de reproduction (2) et la couche réfléchissante (5), dans laquelle la couche de vernis coloré (4) est formée comme un motif ou une trame,
**caractérisée en ce que** :
i) des éléments de motif ou de trame voisins (40) de la couche de vernis coloré (4) présentent une distance (74) les uns par rapport aux autres qui se situe dans une plage de 50 à 250 µm, de préférence de 70 à 200 µm, et/ou **en ce que** :
ii) une largeur de ligne, un diamètre ponctuel ou un diamètre d'élément individuel (73) des éléments de motif ou de trame (40) se situe dans une plage de 50 à 250 µm, de préférence, de 70 à 200 µm.

2. Feuille (1) selon la revendication 1,
**caractérisée en ce que** :
la couche de vernis coloré (4) présente une épaisseur dans une plage de 0,1 à 6 µm, de préférence de 0,2 à 4 µm et/ou **en ce que** le recouvrement de surface de la structure en relief (3) avec la couche de vernis coloré (4) se situe dans une plage de 5 à 95%, de préférence de 25 à 75%, de manière davantage préférée de 45 à 55% de la surface totale de la structure en relief (3) et/ou **en ce que** la profondeur (30) de la structure en relief (3) se situe dans une plage de 50 à 1000 nm, de préférence de 100 à 500 nm et/ou **en ce que** la structure en relief (3) est une structure à lignes (71) présentant une fréquence de lignes (31) dans une plage de 100 à 1000 lignes/mm, de préférence de 100 à 500 lignes.

3. Feuille selon l'une des revendications précédentes,
**caractérisée en ce que** :
la couche de vernis de reproduction (2) et la couche de vernis coloré (4) présentent un indice de réfraction dont les taux se distinguent d'au moins 0,1.

4. Feuille (1) selon l'une des revendications précédentes,
**caractérisée en ce que** :
la feuille (1) présente sur un deuxième côté de la couche de vernis de reproduction (2) une couche de vernis protecteur (9).

5. Feuille (1) selon l'une des revendications précédentes,
**caractérisée en ce que** :
la feuille (1) présente sur le premier côté (21) de la couche de vernis de reproduction (2), une couche d'adhésif (6) qui recouvre la couche de vernis de reproduction (2), la couche de vernis coloré (4) et la couche réfléchissante (5).

6. Papier de sécurité pour la production de documents de valeur (10) qui présente au moins une feuille (1) selon l'une des revendications 1 à 5 sous la forme d'un élément de sécurité.

7. Document de valeur (10) tel qu'un billet de banque, une carte d'identité ou similaires, qui présente au moins une feuille (1) selon l'une des revendications 1 à 5, sous la forme d'un élément de sécurité.

8. Feuille de transfert (50) pour la production d'éléments de sécurité qui présente une feuille de support (7) et une feuille (1) détachable de la feuille de support (7) selon l'une des revendications 1 à 5, sous la forme d'une couche de transfert.

9. Feuille de transfert (50) selon la revendication 8,
**caractérisée en ce que** :
entre la feuille de support (7) et la couche de transfert (1) est disposée une couche de détachement (8).

10. Procédé de production d'une feuille (1) selon l'une des revendications 1 à 5, dans lequel
a) sur un premier côté (21) d'une couche de vernis de reproduction translucide (2), une structure en relief diffractive (3) est formée,
b) après l'étape a) sur la structure en relief (3) une couche de vernis coloré translucide (4) est appliquée seulement par endroits de manière à ce que la couche de vernis coloré (4) soit formée comme un motif ou une trame, dans lequel
i) des éléments de motif ou de trame voisins (40) de la couche de vernis coloré (4) présentent une distance (74) les uns par rapport aux autres qui se situe dans une plage de 50 à 250 µm, de préférence de 70 à 200 µm, et/ou en ce que
ii) une largeur de ligne, un diamètre ponctuel ou un diamètre d'élément individuel (73) des éléments de motif ou de trame (40) se situe dans une plage de 50 à 250 µm, de préférence, de 70 à 200 µm, et
c) après l'étape b) sur le premier côté (21) de la couche de vernis de reproduction (2) est appliquée au moins par endroits, une couche réfléchissante (5), de préférence sous la forme d'une couche métallique.

11. Procédé selon la revendication 10,
**caractérisé en ce que** :
le procédé s'effectue de rouleau à rouleau et/ou en ce que la couche de vernis coloré (4) est imprimée, de préférence, par héliogravure, sérigraphie ou flexographie.

12. Procédé selon la revendication 10 ou 11,
**caractérisé en ce que** :
la couche de vernis coloré (4) est disposée en repérage de la structure en relief (3), avec une tolérance de repérage dans une plage de 100 à 1000 µm, de préférence de 200 à 600 µm.

13. Procédé selon l'une des revendications 10 à 12,
**caractérisé en ce que** :
le vernis coloré utilisé pour la formation de la couche de vernis coloré (4) est coloré d'autant plus intensément que le recouvrement de surface de la structure en relief (3) par la couche de vernis coloré (4) est faible.

14. Procédé selon l'une des revendications 10 à 13,
**caractérisé en ce que** :
avant l'étape a), la couche de vernis de reproduction (2) est imprimée sur une feuille de support (7) dans laquelle, de préférence, une distorsion due à une reproduction thermique de la structure en relief diffractive (3) de la couche de reproduction (2) est identifiée par une détection optique sur une marque de repérage disposée sur la feuille de support (7) et compensée par un ajustement d'un cylindre d'impression ou d'un élément de transport.

15. Procédé selon l'une des revendications 10 à 14,
**caractérisé en ce que** :
à l'étape c), la couche réfléchissante (5) est partiellement retirée, de préférence par un procédé de démétallisation.
